# EUROPEAN PATENT APPLICATION

(11) **EP 4 523 885 A1**
(43) Date of publication of application: **19.03.2025**
(21) Application number: 23198040.0
(22) Date of filing: 18.09.2023
(51) Int. Cl.: B29C 64/106, B29C 64/386, B33Y 10/00, B33Y 50/00, B28B 1/00, E04G 21/02, G06F 30/20

(54) **GENERATING MACHINE CONTROL DATA FOR CUSTOMIZING 3D PRINTED ELEMENTS**

(71) Applicant: Sika Technology AG, 6340 Baar (CH)
(72) Inventor: BERNARD, Mylène, 8952 Schlieren (CH); LOOTENS, Didier, 6010 Kriens (CH)
(74) Representative: Sika Patent Attorneys

(57) **Abstract**

A computer implemented method for generating machine control data for a 3D printer to produce a three-dimensional object with a three-dimensional surface structure on at least one surface of the three-dimensional object, comprises the steps of:
a) Providing a three-dimensional data model (100) of the three-dimensional object to be produced;
b) Defining an area (111) to be structured on a surface of the data model of the three-dimensional object;
c) Conversion of the data model of the three-dimensional object provided in step a) to specific machine control data (200) for the 3D printer defining a print path of the 3D printer and optionally printing parameters of the 3D printer required for producing the three-dimensional object;
d) Identifying positions on the print path lying on the area to be structured;
e) Defining an offset amplitude (210) of the three-dimensional surface structure, whereby the offset amplitude represents a height and/or depth of the surface structure with respect to the surface of the three-dimensional object on which the surface structure is to be located;
f) Modifying the machine control data obtained in step c) and related to the positions identified in step d), such that when printing the three-dimensional object based on the adjusted machine control data (200') the surface structure is created on the surface of the three-dimensional object with the defined offset amplitude of step e).
g) Providing the modified machine control data obtained in step f), in particular in the form of a file.

## Description

### Technical field

The invention relates to a computer implemented method for generating machine control data for a 3D printer to produce a three-dimensional object with a three-dimensional surface structure on at least one surface of the three-dimensional object. Also, the invention is directed to a corresponding computer program. Further aspects of the invention are directed to a method for producing a three-dimensional object with a three-dimensional surface structure, especially made from mineral binder composition, with a 3D printer, and to a system comprising a data processing unit and a 3D printer comprising means for carrying out said method.

### Background art

The production of shaped bodies by additive manufacturing methods is becoming increasingly important in all fields of technology. The term "additive manufacturing method" or "additive manufacturing" refers to methods in which a three-dimensional object or a shaped body is produced by selective three-dimensional deposition, application and/or solidification of material. Additive manufacturing methods are also referred to using terms such as "generative manufacturing methods", "additive manufacturing" or "3D printing".

In this process, the deposition, application and/or solidification of the material takes place in particular based on a data model of the object to be produced. In the additive manufacturing method, each object is typically produced from one or a plurality of sheets. Ordinarily, an object is manufactured using a shapeless material (e.g. liquids, powders, granules, etc.) and/or a shape-neutral material (e.g. bands, wires) that in particular is subjected to chemical and/or physical processes (e.g. melting, polymerization, sintering or curing).

An important step in 3D printing is the conversion of the data model of the object to be produced into machine control data for the 3D printer. This is usually done with so-called "slicers", i.e. special computer programs capable of converting data models directly into the machine control data required for 3D printing. An example of such a program is "Slic3r" (https://slic3r.org). However, such data conversions are computationally intensive and therefore require high computing power and time.

In the construction field, efforts have been under way for some time to produce geometrically sophisticated components such as e.g. mortar or concrete elements, e.g. walls, pillars, or floors, by means of 3D printing. The physical and chemical properties of concrete mixtures, however, make the generative production of 3D objects made of concrete difficult.

WO 2018/115166 A1 (Sika Technology AG) describes for example a method for producing a shaped body from a curable material, in particular from a mineral binder composition, wherein the curable material is applied layer by layer in an additive method, in particular in an additive free-space method, by a printing head that can be moved in at least one spatial direction and wherein an application rate of the curable material and the temporal development of strength of the curable material are coordinated with each other.

Depending on the installation situation and aesthetic requirements, construction elements such as walls, pillars, or floors are required to have special surface structures. Often these are surface structures with a constant height or depression in relation to the surface on which they are located, similar to a positive or a negative embossment. These objects are often very similar in relation to the basic structure but may have different surface structures, e.g. for obtaining a specific aesthetic appearance or surface functionality.

Although these elements differ only with respect to their surface structure, for each of these elements an individual data model has to be generated, which then has to be sliced as a whole before 3D printing can be performed. Of course, one and the same existing model for the basic structure can be merged with a different surface structure, e.g. in a Computer Aided Design (CAD) environment, to obtain the individual data models of the different elements. Nevertheless, each individual data model in the end has to be sliced as a whole, which is a time-consuming process requiring high computing power.

There is therefore a continuing need for new and improved solutions that overcome the above-mentioned drawbacks to the extent possible.

### Disclosure of the invention

The object of the present invention is therefore to provide improved solutions for the production of three-dimensional objects with a three-dimensional surface structure on at least one surface of the three-dimensional object. In particular, the solutions should allow for a fast and/or resource-efficient production of such three-dimensional objects, especially having surface structures with a constant height or depression in relation to the surface on which they are located. This, if possible, without compromising the quality of the objects produced.

Surprisingly, it has been found that the object according to the invention can be achieved by a method according to claim 1. According to the invention, on a data model of the basic structure of the three-dimensional object to be produced, the area to be structured is defined and the data model of the basic structure is sliced without the surface structure. The surface structure then is generated directly in the machine control data by modifying this data. This turned out to be much more resource-efficient and less time consuming when compared to the known methods.

Subsequently, the so obtained machine control data can be providing in a usual manner, e.g. in the form of a file, whereby especially the machine control data is represented by numerical control (NC) programming code, especially by G-code. Machine control data provided in this manner can directly be used with ordinary 3D printers. Thus, there is no need for adaption of the 3D printers or their control units.

Also, if a further object with one and the same basic structure but a different surface structure is required or if the surface structure turned out to be unsatisfactory, there is no need to perform time consuming and resource-intensive merging operations on the data models. Instead, it is sufficient to redefine the area to be structured and/or the offset amplitude and directly modify the machine control data of the already converted basic structure.

Additional aspects of the invention are subject of further independent claims. Particularly preferred embodiments are outlined throughout the description and the dependent claims.

### Ways of carrying out the invention

A first aspect of the present invention is directed to a computer implemented method for generating machine control data for a 3D printer to produce a three-dimensional object with a three-dimensional surface structure on at least one surface of the three-dimensional object, comprising the steps of:
a) Providing a three-dimensional data model of the three-dimensional object to be produced;
b) Defining an area to be structured on a surface of the data model of the three-dimensional object;
c) Conversion of the data model of the three-dimensional object provided in step a) to specific machine control data for the 3D printer defining a print path of the 3D printer and optionally printing parameters of the 3D printer required for producing the three-dimensional object;
d) Identifying positions on the print path lying on the area to be structured;
e) Defining an offset amplitude of the three-dimensional surface structure, whereby the offset amplitude represents a height and/or depth of the surface structure with respect to the surface of the three-dimensional object on which the surface structure is to be located;
f) Modifying the machine control data obtained in step c) and related to the positions identified in step d), such that when printing the three-dimensional object based on the adjusted machine control data the surface structure is created on the surface of the three-dimensional object with the defined offset amplitude of step e).
g) Providing the modified machine control data obtained in step f), in particular in the form of a file.

Particularly, the three-dimensional surface structure is a structure that, over its entire extension in a plane parallel to the surface on which it is located and in relation to this surface, has a constant height or depth. Thus, the surface structure can be a surface structure that protrudes from the surface of the three-dimensional object or a surface structure that is recessed in the surface of the three-dimensional object.

Especially, the three-dimensional surface structure is an embossing. An embossing in particular is meant to be a two-dimensional structure that is recessed or raised into the at least one surface of the three-dimensional object.

In a special embodiment, the at least one surface of the three-dimensional object at the sections outside the area to be structured has a wall thickness that equals a line thickness of the 3D printer. The line thickness of the 3D printer also is referred to as print line thickness. This can for example be the case if the three-dimensional object with a three-dimensional surface structure on the at least one surface is a wall or a hollow body, e.g. e hollow pillar.

However, in other embodiments, the at least one surface of the three-dimensional object at the sections outside the area to be structured has a wall thickness that is larger than a line thickness of the 3D printer. This can for example be the case if the three-dimensional object to be produced is a massive pillar, a thick wall or a floor.

In particular, steps a) and b) take place in a 3D CAD software module or environment. Such software modules or environments are known per se and commercially available.

Especially, the three-dimensional data model of the three-dimensional object is a solid model. In contrast to wire-frame models or surface models, solid models represent the whole volume of an object, including the inner structure.

The area to be structured on a surface of the data model of the three-dimensional object can be directly defined on the data model, e.g. in a 3D CAD software module or environment. The area to be structured is for example represented by the data points within the defined area.

In a special embodiment, step b) may comprise the following sub-steps:
i) Providing a two-dimensional or a three-dimensional data model of the surface structure to be produced;
ii) Arranging the data models of the three-dimensional object and the surface structure such that the surface structure is located on a surface of the data model of the three-dimensional object, and taking a contact area between the surface structure and the three-dimensional object as the area to be structured.

Such operations can be performed in standard 3D CAD software modules or environments.

Thereby, the two-dimensional or a three-dimensional data model of the surface structure can be a model selected from a wire-frame model, a surface model or a solid model.

In particular, step c) takes place in a slicer software module or environment. Such software modules or environments are known per se and commercially available.

Especially, in step c) the data model of the three-dimensional object is divided in a stack of two-dimensional layers and these layers are represented by commands defining the print path of the 3D printer and optionally the printing parameters of the 3D printer. Such operations can be performed in standard slicer software modules or environments.

The machine control data preferably is represented by numerical control (NC) programming code, especially by G-code, in particular in line with ISO 6983-1 :2009-12. Machine control data provided in this manner can directly be used with ordinary 3D printers. However, for special applications, other data formats are suitable as well.

In particular, the machine control data comprises the print path in the form of a sequence of coordinates, especially spatial coordinates, the printer follows during the printing process, in particular to produce individual print lines.

The offset amplitude to be defined in step e) can be positive or negative. For example, a positive offset amplitude represents a surface structure that protrudes from the surface of the three-dimensional object whereas a negative offset amplitude represents a surface structure that is recessed in the surface of the three-dimensional object or vice versa.

In step f), modifying the machine control data in particular is effected such that the print path and/or the printing parameters is/are modified.

Especially, the printing parameters comprise the flow rate of the printing material, the printing speed and/or a print line width. However, alternatively or additionally, the printing parameters may include further parameters, such as e.g. a temperature of an extrusion head of the 3D printer and/or a composition of the printing material.

The print line width in particular is meant to be a width of a line printed with the 3D printer. The width is measured in a direction perpendicular to the longitudinal axis of the line. Especially a standard print line width is defined.

The print line width may be controlled by the flow rate of the printing material, the printing speed of the extrusion head of the 3D printer and/or the size of an adjustable exit nozzle. Thereby, controlling of the print line width in particular is based on a predefined relationship between the print line width and the flow rate of the printing material, the printing speed of the extrusion head of the 3D printer and/or the size of an adjustable exit nozzle.

In a special embodiment, in step f), modifying the machine control data is effected such that at the positions identified in step d) the print path is shifted away from the original path, especially by a distance that equals the offset amplitude. In this embodiment, the surface structure can be produced by a modified print path in the area to be structured.

If required, the print path may be supplemented by additional points, which must be approached during the printing process, e.g. in order to avoid uncontrolled jumps of the printing head and/or to smooth the surface structure. The additional points may for example be generated by interpolation operations.

In another embodiment, in step f), modifying the machine control data is effected such that at the positions identified in step d) a print line width is reduced or increased, especially by increasing or decreasing the flow rate of the printed material and/or by increasing or decreasing the printing speed. Thereby, the surface structure can at least partly be formed by applying more or less printing material in the area to be structured.

However, a combined modification of the print path and the printing parameters is possible as well. This inter alia allows to control whether the surface structure is formed only on one side of the print line or on both sides of the print line.

A surface structure that is formed on both sides of the print line is for example interesting if the at least one surface of the three-dimensional object at the sections outside the area to be structured has a wall thickness that equals a line thickness of the 3D printer. In this case the surface structure can be realized on two opposing sides of the three-dimensional object in one go. This can for example be the case if the three-dimensional object to be produced is a wall or a hollow body, e.g. e hollow pillar.

A surface structure that is formed only on one side of the print line is for example interesting if the at least one surface of the three-dimensional object at the sections outside the area to be structured has a wall thickness that is larger than a line thickness of the 3D printer. In this case, the inner parts of the surface remain unaffected by the surface structure. This is for example suitable for a massive pillar, a thick wall or a floor.

For example, in a further preferred embodiment, at the positions identified in step d), the print line width is reduced or increased, especially by twice the offset amplitude, while the print path remains unchanged. In this case, the surface structure is formed on both sides of the print line. In particular, the print line width reduction or increase is with respect to the predefined standard print line width.

Specifically, in step f) modifying the machine control data is effected such that the printing speed and/or flow rate at the positions identified in step d) is modified without modifying the print path. Thereby, the above-described configuration with the surface structure formed on both sides of the print line is obtainable.

According to another preferred example, at the positions identified in step d), the print line width is reduced or increased by the offset amplitude while the print path is shifted away from the original path and/or the area to be structured. Thereby, in particular, the print path is shifted by a distance that equals half of the offset amplitude. In this manner, it is possible for have the surface structure formed only on one side of the print line whereas on the opposing side the print has the original borderline. In particular, the print line width reduction or increase is with respect to the predefined standard print line width.

Specifically, in step f), modifying the machine control data is effected such that at the positions identified in step d), (i) the printing path and (ii) the printing speed and/or flow rate are simultaneously modified. Thereby, the above-described configuration with the surface structure formed only on one side of the print line is obtainable.

These approaches are in particular suitable if the surface structure is to be formed on a vertical surface or an inclined surface of the three-dimensional object.

Thus, especially, in step b) the area to be structured on a surface of the data model of the three-dimensional object is an area on a vertical surface or an inclined surface of the data model of the three-dimensional object.

"Vertical" or "inclined" in particular is with respect to the printer bed or the planes along which the object is sliced in step c), which in particular is/are oriented horizontally.

In a further preferred embodiment, the method according to the invention further comprises a step of modifying the machine control data in step f) to produce one or more supports for the surface structure to be created. Supports are meant to be auxiliary structures for supporting the surface structure during the manufacturing process that are easily detachable from it at a finishing stage of the object production. This is for example helpful if the surface structure to be produced has an overhang. Especially, the data for the supports is generated directly in step f). Suitable algorithms for producing supports are known per se from slicer software modules and can be implemented accordingly in the present method.

However, in another possible embodiment, suitable support elements can be placed on the printer bed before and/or during the printing process.

Especially, the offset amplitude and/or the standard print line width are manually specified by a user. Also, other parameters like the standard printing speed, standard flow rate and the like can be manually defined by a user. This can e.g. be realized in a graphical user interface, for example via one or more dialog boxes.

A further aspect of the preset invention is directed to a data processing system, especially a computer system, comprising means for carrying out the above-described method. The data processing system can be a single computer system or a distributed computer system.

Another aspect of the invention is related to a computer program comprising instructions which, when the program is executed by a computer, cause the computer to carry out the above-described method.

A still further aspect of the present invention is directed to a method for producing a three-dimensional object with a three-dimensional surface structure on at least one surface of the three-dimensional object with a 3D printer, comprising the steps of:
i) Performing the computer implemented method as described above;
ii) Printing the three-dimensional object with the 3D printer based on the modified machine control data provided in sub-step g) of step i).

Thereby, in principle, any kind of material known for 3D printing can be used in this process.

Preferably, the three-dimensional object is produced with a shapeless material, e.g. a liquid, a powder, a granule, and/or a shape-neutral material, e.g. a band, a wire, that in particular is subjected to chemical and/or physical processes, e.g. solidification, melting, cooling, polymerization, sintering and/or curing.

Especially, the three-dimensional object is produced with a thermoplastic material and/or a curable material.

A "curable material" denotes a material that is typically flowable or liquefiable, and after mixing, for example by adding mixing water, mixing in components, or heating, can undergo a chemical reaction to harden into a solid. For example, the curable material can be reaction resins, mineral binders, mineral binder compositions or mixtures thereof.

Reaction resins are in particular liquid or liquefiable synthetic resins that harden into duromers by polymerization or polyaddition. For example, unsaturated polyester resins, vinyl ester resins, acrylic resins, epoxy resins, polyurethane resins and/or silicone resins can be used.

The term "mineral binder" is to be understood in particular as referring to a binder that undergoes a hydration reaction in the presence of water to form solid hydrates or hydrate phases. This can for example be a hydraulic binder (e.g. cement or hydraulic lime), a latent hydraulic binder (e.g. slag), a pozzolanic binder (e.g. fly ash) or a non-hydraulic binder (e.g. gypsum or calcium lime).

Accordingly, a "mineral binder composition" is a composition comprising at least one mineral binder. In the present case, this comprises in particular the binder, aggregates and optionally one or a plurality of admixtures. Examples of suitable aggregates include rock particles, gravel, sand (in natural and/or processed (e.g. crushed) form) and/or fillers. The mineral binder composition is in particular in the form of a liquid binder composition mixed with mixing water.

A "cementitious binder" or a "cementitious binder composition" is understood herein to refer in particular to a binder or a binder composition with a content of at least 5 wt %, in particular at least 20 wt %, preferably at least 35 wt % and in particular at least 65 wt % of cement clinker. The cement clinker is preferably a Portland cement clinker and/or a calcium sulfoaluminate cement clinker, in particular a Portland cement clinker. In the present context, cement clinker refers in particular to ground cement clinker.

In particular, the mineral binder or the binder composition comprises a hydraulic binder, preferably cement. Particularly preferred is a cement with a cement clinker content of ≥35 wt %, in particular a cement of type CEM I, II, III, IV or V, and preferably cement of type CEM I (according to the standard EN 197-1). A content of the hydraulic binder in the mineral binder as a whole is advantageously at least 5 wt %, in particular at least 20 wt %, preferably at least 35 wt % and in particular at least 65 wt %. According to a further advantageous embodiment, the mineral binder consists of at least 95 wt % of a hydraulic binder, in particular cement clinker.

However, it can also be advantageous if the binder composition contains other binders in addition to or instead of a hydraulic binder. These are in particular latent hydraulic binders and/or pozzolanic binders. Suitable latent hydraulic and/or pozzolanic binders are e.g. slag, foundry sand, fly ash and/or silica fume. The binder composition can also comprise inert substances such as e.g. limestone powder, quartz powder and/or pigments. In an advantageous embodiment, the mineral binder comprises 5-95 wt %, in particular 5-65 wt % and in particular 15-35 wt % of latent hydraulic and/or pozzolanic binders.

Especially preferred, the curable material comprises or consists of a mineral binder composition, especially a cementitious mineral binder composition, for example a mortar or concrete composition.

Also, the three-dimensional object with the three-dimensional surface produced comprises or consists of a mineral binder composition, especially a cementitious mineral binder composition, for example a mortar or concrete composition.

The three-dimensional object produced with the method according to the invention can be of virtually any desired form, for example it may be a finished part for a structure, e.g. for a building, a masonry structure and/or a bridge. Especially the three-dimensional object produced with the method according to the invention is a wall, a pillar or a floor of a building.

A 3D printer for use in the above described method preferably comprises a print head that is moveable in at least one, especially in all, spatial direction(s) with which the curable material can be applied in layers at predetermined sites, and a control unit with which the print head can be controlled based on the machine control data obtained in substep g) of step (ii). Such 3D printers are commercially available from different suppliers.

Another aspect of the present invention is directed to a system comprising a data processing unit and a 3D printer comprising means for carrying out the method for producing a three-dimensional object with a three-dimensional surface structure on at least one surface of the three-dimensional object as described above.

Further advantageous implementations of the invention are evident from the exemplary embodiments.

### Brief description of drawings

The drawings used to explain the exemplary embodiments show:
- Fig. 1: a flow chart illustrating a computer implemented method according to the invention;
- Fig. 2: an exemplary illustration of the method of Fig. 1 when producing a cuboid three-dimensional object with a strip-shaped surface structure;
- Fig. 3: a top view of a section of a print line of material printed with a 3D printer when printing the cuboid object with the surface structure of Fig. 2;
- Fig. 4: a top view of another print line that can be produced by alternatively modified machine control data;
- Fig. 5: a top view of a further print line that can be produced by alternatively modified machine control data.

### Exemplary embodiments

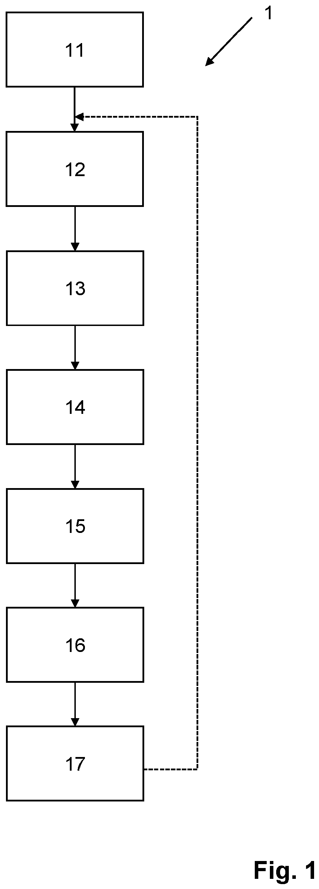

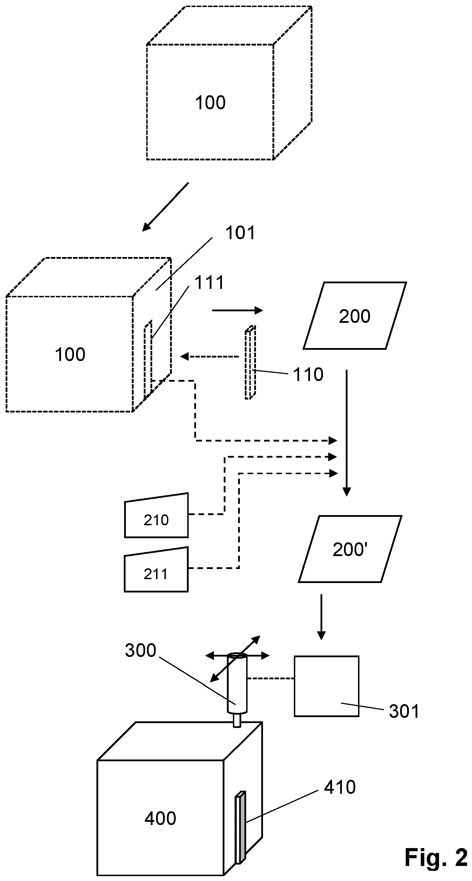

Fig 1. shows a flow chart illustrating the computer implemented method 1 according to the invention. Fig. 2 shows an exemplary illustration of the method of Fig. 1 when producing a cuboid three-dimensional object with a strip-shaped surface structure.

In a first step 11, which is performed for example in a CAD environment, a three-dimensional data model of the three-dimensional object to be produced is provided. This is for example a solid model of a cuboid body 100 as shown by dashed lines in Fig. 2.

Subsequently, in a second step 12, an area to be structured 111 on a surface 101 of the data model 100 is defined. This can e.g. be done by providing a three-dimensional data model 110 of the surface structure to be produced and arranging the data model of the three-dimensional object 100 and the surface structure 110 such that the surface structure is located on the surface 101, and taking a contact area between the surface structure and the three-dimensional object as the area to be structured 111. Alternatively, the area to be structured 111 can directly be defined on the surface 101 by means of CAD tools.

In the third step 13, the data model 100 of the three-dimensional object provided in the first step 11 is converted to specific machine control data 200 for the 3D printer defining a print path of the 3D printer and printing parameters of the 3D printer required for producing the cuboid object. This is done with a slicer software module. The printing parameters include for example a printing speed and a flow rate of the print material.

Next, in the fourth step 14, positions on the print path lying on the area to be structured 111 are identified in the machine control data 200.

With the fifth step 15 an offset amplitude 210 of the three-dimensional surface structure is defined, e.g. by a user. The offset amplitude 210 represents a height of the surface structure 110 with respect to the surface 101 of cuboid object 100 on which the surface structure 110 is to be located. Further parameters 211, such as the standard print line width and/or printing speed can be defined as well.

In the sixth step 16, the machine control data 200 obtained in step 13 and related to the positions identified in step 14 are modified, such that when printing the three-dimensional object based on the adjusted machine control data 200' the surface structure 110 is created on the surface of the three-dimensional object with the defined offset amplitude of step 16.

The so obtained modified machine control data 200' then is provided for example in the form of a G-code file in the seventh step 17.

As shown in Fig. 2, the modified machine control data 200' can be sent to a control unit 301 of a 3D printer 300, which produces a real world cuboid object 400 with a strip shaped surface structure 410. The cuboid object 400 with the strip shaped surface structure 410 can for example be made of concrete.

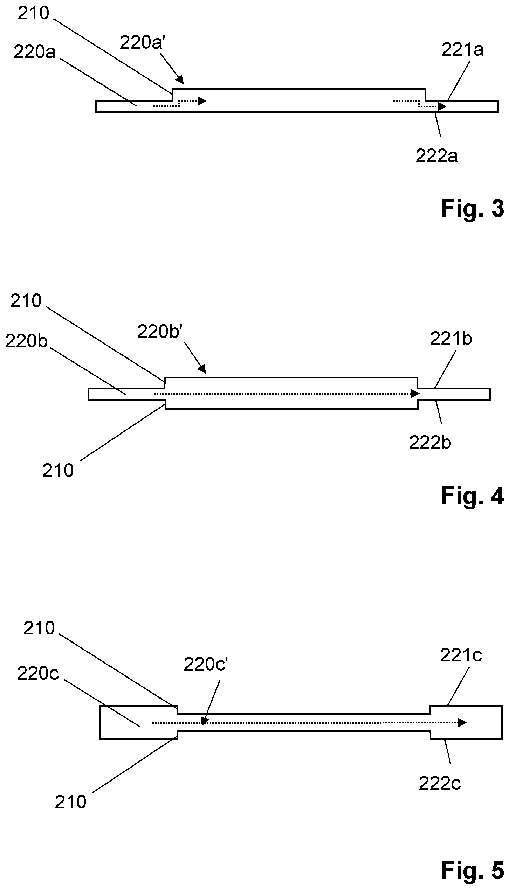

Fig. 3 shows a top view of a section of a print line 220a of material printed with the 3D printer when printing the cuboid object 400 with the surface structure 410. At the section 220a' where the machine control data 200' has been modified, i.e. in the section of the surface structure, the print line width is larger than before and after that section. Specifically, in section 220a' the print line width is increased by the offset amplitude 210. In order to obtain this structure, as indicated by the dashed angled arrows, the print path was modified, i.e. shifted to the upper side in Fig. 3 and simultaneously the print line width was increased, e.g. by reducing the printing speed and/or increasing the flow rate of the material to be printed. This results in a surface structure only at the upper boundary line 221a of the print line, whereas the lower boundary line 222a is a straight line that is the same before and after section 222a'.

Fig. 4 shows a top view of a print line 220b that can be produced by differently modified machine control data. In this case, similar to Fig. 3, at the section 220b' where the machine control data has been modified, i.e. in the section of the surface structure, the print line width is larger than before and after that section. Specifically, in section 220b' the print line width is increased by twice the offset amplitude 210. However, in contrast to Fig. 3 the surface structure is formed on both boundary sides 221b, 222b. This can be achieved by increasing the print line width in section 220b' without modifying the print path (indicated by a straight dashed line).

Fig. 5 shows a top view on a further print line 220c that can be produced similar to the print line of Fig. 4. However, in this case, at the section 220c' where the machine control data has been modified, i.e. in the section of the surface structure, the print line width is smaller than before and after that section. Specifically, in section 220c' the print line width is decreased by twice the offset amplitude 210. Thus, a depression is formed on both sides 221c, 222c of the print line. This can be achieved by decreasing the print line width in section 220c' without modifying the print path (indicated by a straight dashed line).

Print lines as shown in Fig. 4 and 5 are in particular interesting for objects with a wall thickness of the surface to be structured equal to the width of the print line. In this case, the surface structure can be obtained on both sides of the surface. An example of such a structure is e.g. a wall element that is intended as a room divider.

It will be appreciated by those skilled in the art that the present invention can be implemented in other specific forms without departing from the spirit or essential characteristics thereof. The presently disclosed implementations and embodiments are therefore considered in all respects to be illustrative and not restricted.

## Claims

1. Computer implemented method for generating machine control data for a 3D printer to produce a three-dimensional object with a three-dimensional surface structure on at least one surface of the three-dimensional object, comprising the steps of:
a) Providing a three-dimensional data model of the three-dimensional object to be produced;
b) Defining an area to be structured on a surface of the data model of the three-dimensional object;
c) Conversion of the data model of the three-dimensional object provided in step a) to specific machine control data for the 3D printer defining a print path of the 3D printer and optionally printing parameters of the 3D printer required for producing the three-dimensional object;
d) Identifying positions on the print path lying on the area to be structured;
e) Defining an offset amplitude of the three-dimensional surface structure, whereby the offset amplitude represents a height and/or depth of the surface structure with respect to the surface of the three-dimensional object on which the surface structure is to be located;
f) Modifying the machine control data obtained in step c) and related to the positions identified in step d), such that when printing the three-dimensional object based on the adjusted machine control data the surface structure is created on the surface of the three-dimensional object with the defined offset amplitude of step e).
g) Providing the modified machine control data obtained in step f), in particular in the form of a file.

2. Computer implemented method according to claim 1, whereby the three-dimensional data model of the three-dimensional object is a solid model.

3. Computer implemented method according to any of preceding claims, whereby step b) comprises the following sub-steps:
i) Providing a two-dimensional or a three-dimensional data model of the surface structure to be produced;
ii) Arranging the data models of the three-dimensional object and the surface structure such that the surface structure is located on a surface of the data model of the three-dimensional object, an taking a contact area between the surface structure and the three-dimensional object as the area to be structured.

4. Computer implemented method according to any of preceding claims, whereby in step c) the data model of the three-dimensional object is divided in a stack of two-dimensional layers and these layers are represented by commands defining the print path of the 3D printer and optionally the printing parameters of the 3D printer.

5. Computer implemented method according to any of preceding claims, whereby the machine control data comprises the print path in the form of a sequence of coordinates, especially spatial coordinates, the printer follows during the printing process, in particular to produce print lines.

6. Computer implemented method according to any of preceding claims, whereby the machine control data is represented by numerical control (NC) programming code, especially by G-code, in particular in line with ISO 6983-1:2009-12.

7. Computer implemented method according to any of preceding claims, whereby in step f) modifying the machine control data is effected such that the print path and/or the printing parameters is/are modified.

8. Computer implemented method according to any of preceding claims, whereby the printing parameters comprise the flow rate of the printing material and/or the printing speed, especially the printing speed.

9. Computer implemented method according to any of preceding claims, whereby in step f) modifying the machine control data is effected such that at the positions identified in step d) the print path is shifted away from the original path, especially by a distance that equals the offset amplitude.

10. Computer implemented method according to any of preceding claims, whereby in step f) modifying the machine control data is effected such that at the positions identified in step d) the print line width is reduced or increased, especially by increasing or decreasing the flow rate of the printed material and/or by increasing or decreasing the printing speed.

11. Computer implemented method according to claim 9, whereby at the positions identified in step d) the print line width is reduced or increased by the offset amplitude while the print path is shifted by a distance that equals half of the offset amplitude.

12. Computer implemented method according to claim 10, whereby at the positions identified in step d) the print line width is reduced or increased, especially by twice the offset amplitude, while the print path remains unchanged.

13. Method for producing a three-dimensional object with a three-dimensional surface structure on at least one surface of the three-dimensional object with a 3D printer, comprising the steps of:
(i) Performing the method according to any of claims 1 - 12;
(ii) Printing the three-dimensional object with the 3D printer based on the modified machine control data provided in sub-step g) of step (i).

14. Method according to claim 13, whereby the three-dimensional object is produced with a curable material wherein the curable material comprises a mineral binder composition, especially a mortar or concrete composition and wherein the curable material is applied in layers by the 3D printer having a print head that is moveable in at least one spatial direction.

15. System comprising a data processing unit and a 3D printer, the system comprising means for carrying out the method of any of claims 13 - 14.

16. A computer program comprising instructions which, when the program is executed by a computer, cause the computer to carry out the method of any of claims 1-12.
